# EUROPÄISCHE PATENTANMELDUNG

(11) **EP 4 635 657 A1**
(43) Veröffentlichungstag der Anmeldung: **22.10.2025**
(21) Anmeldenummer: 25166395.1
(22) Anmeldetag: 26.03.2025
(51) Int. Cl.: B23B 33/00, B23B 31/30, B23F 23/06

(54) **REIBKEGELSPANNSYSTEM FÜR EINE WERKZEUGMASCHINE, WERKZEUGMASCHINE UND VERFAHREN ZUR BEARBEITUNG EINES WERKSTÜCKS MIT EINER WERKZEUGMASCHINE**

(30) Priorität: 11.04.2024 DE 102024110155
(71) Anmelder: Adelbert Haas GmbH, 78647 Trossingen (DE)
(72) Erfinder: Zepf, Timo, 78606 Seitingen-Oberflacht (DE); Wember, Dirk, 78628 Rottweil (DE)
(74) Vertreter: Westphal, Mussgnug & Partner Patentanwälte mbB

(57) **Zusammenfassung**

Bereitgestellt werden ein Reibkegelspannsystem (100, 200) mit einem rotationssymmetrischen Grundkörper (110, 210), an dem ein Reibkegelaufsatz (120, 220) mit einer einen Reibkegel bildenden Werkstückaufnahme (123, 223) angeordnet ist und mit einem Zentrierelement (130, 230) mit einer Zentrierspitze (131, 231), wobei das Zentrierelement (130, 230) parallel zur Symmetrieachse des rotationssymmetrischen Grundkörpers (110, 210) verschiebbar in einer den Grundkörper (110, 210) und den Reibkegelaufsatz (120, 220) konzentrisch zur Symmetrieachse des rotationssymmetrischen Grundkörpers (110, 210) durchsetzenden Öffnung angeordnet ist, die in die Werkstückaufnahme (123, 223) übergeht, so dass das Zentrierelement (120, 230) zwischen einer ausgefahrenen Position, in der die Zentrierspitze (131, 231) aus der Werkstückaufnahme (123, 223) hervorragt, und einer zurückgezogene Position, in der die Zentrierspitze (131, 231) sich innerhalb der Werkstückaufnahme (123, 223) befindet, bewegt werden kann, bei der Grundkörper (110, 210) mindestens ein Spannmittel (115, 215, 216) aufweist, das ausgelegt und eingerichtet ist, um das Zentrierelement (130, 230) zumindest in der ausgefahrenen Position zentrisch zu spannen, so dass eine Rotation des Grundkörpers (110, 210) auf das Zentrierelement (130, 230) übertragen wird, eine Werkzeugmaschine mit einem solchen Reibkegelspannsystem und ein Verfahren zur Bearbeitung eines Werkstücks mit einer solchen Werkzeugmaschine.

## Beschreibung

Die Erfindung betrifft ein Reibkegelspannsystem für eine Werkzeugmaschine, eine Werkzeugmaschine und ein Verfahren zur Bearbeitung eines Werkstücks mit einer Werkzeugmaschine.

Reibkegelspannsysteme sind eine seit langem bekannte Gattung von Werkstückaufnahmen für Werkzeugmaschinen. Sie zeichnen sich dadurch aus, dass die Aufnahme für das zu bearbeitende Werkstück sich von ihrer dem Werkstück zugewandten Stirnfläche in Richtung auf die Maschinenspindel hin konisch, insbesondere kegelförmig, verjüngt. Das Werkstück wird - üblicherweise mittels eines Reitstocks der Werkzeugmaschine - in die Aufnahme hineingepresst und dabei vorzugsweise durch die Geometrie der Aufnahme zentriert. Der bei dem Hineinpressen entstehende Reibschluss führt insbesondere dazu, dass die Drehung der Maschinenspindel auf das Werkstück übertragen wird.

Typische Vorteile von Reibkegelspannsystemen sind, dass sie preisgünstiger als hydraulische, pneumatische oder mittels Zug-/Druckstangen betätigte Ausgleichsspannfutter sind, dass sie bei gleichem Durchmesser signifikant höhere Mitnahme- und Ausgleichsdrehmomente als hydraulische Ausgleichsspannfutter aufweisen und dass sie eine maximale Steifigkeit haben, da der Reibkegel fest mit der Spindel der Rotationsachse verbunden ist, während bei einem Ausgleichsspannfutter durch Führungsspiel in den beweglichen Spannbacken und den verschiebbaren Futterkörper Umkehrspiel und eine in Rotationsrichtung weiche bzw. flexible Spannung entstehen.

Der beim Eindrücken entstehende Reibschluss zwischen Reibkegel und Werkstück kann so stark sein, dass sich das Werkstück, auch wenn die Druckbeaufschlagung, die insbesondere durch den Reitstock erfolgen kann, wegfällt, sich nicht selbständig vom Reibkegelspannsystem löst. Daher ist es bekannt, das Reibkegelspannsystem mit einem axial verschiebbaren Ausstoßer zu versehen, der insbesondere als ein Dorn ausgeführt sein kann.

Um das volle Potential eines Reibkegelspannsystems im Hinblick auf die erreichbare Präzision bei der Bearbeitung des Werkstücks abzurufen, ist es allerdings bei einer Vielzahl von Anwendungsfällen notwendig, das Werkstück vor der Aufnahme in den Reibkegel des Reibkegelspannsystems rund zu schleifen, wozu es in einer anderen Werkzeugaufnahme aufgenommen sein muss. Dies führt dazu, dass bei derartigen Anwendungen bislang ein Umspannen zwingend erforderlich ist.

Die Aufgabe der Erfindung besteht daher darin, ein Reibkegelspannsystem, eine Werkzeugmaschine und ein Verfahren zur Bearbeitung eines Werkstücks bereitzustellen, mit dem auch das Rundschleifen vor der Aufnahme des Werkstücks in den Reibkegel ohne Umspannen des Werkstücks durchgeführt werden kann. Diese Aufgabe wird gelöst durch ein Reibkegelspannsystem mit den Merkmalen des Patentanspruchs 1, eine Werkzeugmaschine mit den Merkmalen des Patentanspruchs 13 und ein Verfahren zur Bearbeitung eines Werkstücks mit den Merkmalen des Patentanspruchs 16. Vorteilhafte Weiterbildungen der Erfindung sind Gegenstand der jeweiligen abhängigen Patentansprüche.

Das erfindungsgemäße Reibkegelspannsystem weist einen rotationssymmetrischen Grundkörper, an dem - bevorzugt aber nicht zwingend auswechselbar - ein Reibkegelaufsatz mit einer den Reibkegel bildenden Werkstückaufnahme angeordnet ist und ein Zentrierelement mit einer Zentrierspitze auf. Das Zentrierelement ist parallel zur Symmetrieachse des rotationssymmetrischen Grundkörpers, um die herum dieser bei seiner Verwendung in einer Werkzeugmaschine rotiert, verschiebbar in einer den Grundkörper und den Reibkegelaufsatz konzentrisch mit der Symmetrieachse durchsetzenden Öffnung angeordnet, die in die den Reibkegel bildende Werkstückaufnahme übergeht. Dementsprechend kann das Zentrierelement längs dieser Symmetrieachse, die typischerweise auch die Mittelachse des Zentrierelements darstellt, zwischen einer ausgefahrenen Position, in der die Zentrierspitze aus der Werkstückaufnahme hervorragt, und einer zurückgezogenen Position, in der die Zentrierspitze sich innerhalb der Werkstückaufnahme befindet, bewegt werden.

Erfindungswesentlich ist, dass der Grundkörper ein Spannmittel aufweist, das ausgelegt und eingerichtet ist, um das Zentrierelement zumindest in der ausgefahrenen Position zentrisch, also mit in radialer Richtung auf das Zentrierelement wirkenden Kräften zu spannen, so dass eine Rotation des Grundkörpers auf das Zentrierelement übertragen wird.

Durch diese Maßnahme wird ermöglicht, dass das Werkstück zunächst für einen vorgelagerten Rundschleifprozess nur zwischen der ausgefahrenen Zentrierspitze und einer zweiten Spitze, typischerweise der Spitze eines Reitstocks der Werkzeugmaschine, gehalten und durch die gespannte Zentrierspitze angetrieben wird. Nach diesem Rundschleifprozess, bei dem insbesondere auch am Werkstück der Spanndurchmesser für das Spannen im Reibkegel selbst erzeugt werden kann, kann dann das Werkstück mit dem Reitstock in den Reibkegel hineingedrückt werden, während die Zentrierspitze zurückgezogen oder zurückgeschoben wird. Dies erfolgt natürlich erst, nachdem die Spannung der Zentrierspitze gelöst wurde, um deren Bewegung zu ermöglichen.

Um eine hohe Präzision bei der Bearbeitung zu ermöglichen ist es vorteilhaft, wenn die Öffnung im Reibkegelaufsatz zumindest einen Abschnitt mit reduziertem Durchmesser aufweist, in den die Zentrierspitze, die bevorzugt durch einen endseitigen Abschnitt des Zentrierelements mit geringerem Durchmesser, dessen freies Ende zu einer Spitze geformt ist, gebildet wird, eingeführt ist.

Besonders präzise lassen sich die oben erwähnten Rundschleifprozesse ausführen, wenn die Zentrierspitze in mindestens zwei Ebenen geführt ist. Eine alternative oder zusätzliche Möglichkeit, hohe Präzision zu erzielen, besteht darin, das Werkstück mit einer Referenzgeometrie zu versehen, in die die Zentrierspitze hineingedrückt wird.

Insbesondere hat es sich als vorteilhaft für das Erreichen höchster Präzision erwiesen, wenn das Zentrierelement in einem Abschnitt der Öffnung innerhalb des Grundkörpers und - typischerweise mit dem Abschnitt des Zentrierelements, der die Zentrierspitze bildet - in einem Abschnitt der Öffnung innerhalb des Reibkegelaufsatzes geführt ist.

Durch das Vorsehen mindestens einer Austrittsöffnung zum Zuführen von Sperrluft oder Kühlmittel in die Öffnung kann diese frei gehalten und das Eindringen von Schmutz und von bei der Bearbeitung des Werkstücks entstehenden Spänen verhindert werden.

Eine besonders bevorzugte Ausführungsform des Spannmittels ist seine Ausgestaltung als Hydrodehnspannfutter. Dieses wird bevorzugt pneumatisch betrieben.

Bevorzugt sind Mittel zur Überwachung zumindest des Erreichens der axialen Endposition der Zentrierspitze im ausgefahrenen Zustand vorhanden, beispielsweise optische oder magnetische Sensoren oder Taster. Alternativ zu einer Lageabfrage an der beweglichen Spitze kann auch der Spannhub des pneumatischen Spannzylinders bzw. der Zug-/Druckstange über ein Positionsmesssystem abgefragt werden, was den Vorteil mit sich bringt, dass dann keine Sensoren im Spannmittel selbst verbaut werden müssen.

Insbesondere ist es vorteilhaft, wenn das Spannmittel gespannt wird, wenn die Zentrierspitze ihre maximal ausgefahrene Position erreicht. Eine besonders einfache Möglichkeit, dies für ein als Hydrodehnmembran ausgeführtes Spannmittel zu erreichen, ist, dass beim Erreichen der maximal ausgefahrenen Position der Zentrierspitze ein Kolben betätigt wird, was dann das Eindrücken eines Fluids in eine vorzugsweise ringförmige, von der Hydrodehnmembran verschlossene Kammer im Grundkörper initiiert. In dieser Ausführungsform bildet also der Kolben bzw. eine Positionsüberwachung der Position der Zug-/Druckstange das Mittel zur Überwachung.

Zusätzlich kann noch die Position des Werkstücks mit dem Messtaster der Maschine ermittelt werden. Die Überprüfung, ob das Werkstück komplett im Reibkegel anliegt und eingepresst ist, kann auch über die Sperrluft oder Kühlmittelspülung mittels Airsensorik oder Fluidsensorik erfolgen. Wenn das Werkstück im Reibkegel anliegt, kann keine Luft oder Kühlmittel mehr entweichen.

In einer besonders bevorzugten Ausführungsform des Reibkegelspannsystems ist am Zentrierelement an seinem der Zentrierspitze gegenüberliegenden Ende eine Stützfeder angeordnet.

Diese kann mehrere Funktionen erfüllen: Erstens führt sie dazu, dass die Zentrierspitze während der Bearbeitung im Reibkegel mit einer geringen Federkraft an dem in den Reibkegel hineingepressten Werkstück anliegt, wodurch eine negative Beeinflussung des Rundlaufs vermieden wird. Zweitens kann sie zur vor- oder nacheilenden Steuerung des Klemmmechanismus verwendet werden. Darüber hinaus ist das zu bearbeitende Teil zwischen den Spitzen als Einführhilfe aufgenommen, so dass es koaxial auf Zentrierbohrungen gehalten in den Reibkegel eingepresst werden kann.

Vorzugsweise ist der Reibkegelaufsatz auswechselbar am Grundkörper angeordnet, so dass er bei Abnutzung des Reibkegels einfach ersetzt werden kann. Wenn dies durch Aufnahme und/oder Spannung des Reibkegelaufsatzes in einem Nullpunktspannsystem erfolgt, ist ein automatisierter Austausch des Reibkegelaufsatzes möglich. Alternativ dazu kann Reibkegelaufsatz über eine Präzisionsschnittstelle am Grundkörper wiederholgenau positioniert angeordnet ist, indem der Reibkegelaufsatz über einen Konus zentriert und/oder über eine Indexierung rotativ orientiert ist.

Zudem kann es zweckmäßig sein, das Zentrierelement verdrehsicher in der Öffnung zu lagern, um auch bei hohen Kräften eine Übertragung der Rotation des Grundkörpers sicherzustellen.

Die erfindungsgemäße Werkzeugmaschine umfasst ein erfindungsgemäßes Reibkegelspannsystem, einen Reitstock und eine Spindel mit einer axial verschiebbaren Zug-/Druckstange aufweist, so dass das Fixierelement in der den Grundkörper und den Reibkegelaufsatz durchsetzenden Öffnung, die in die Werkstückaufnahme übergeht, durch Betätigung der Zug-/Druckstange verschiebbar ist.

Besonders gut geeignet für die Durchführung des Rundschleifens mit an der ausgefahrenen Zentrierspitze gelagertem und von dieser in Drehung versetztem Werkstück ist eine Werkzeugmaschine, deren Reitstock eine mitlaufende Zentrierspitze aufweist.

Ferner ist es bevorzugt, wenn bei der Werkzeugmaschine an der der Zentrierspitze gegenüberliegenden Seite des Zentrierelements eine Feder angeordnet ist, die auf der Zug-/Druckstange abgestützt wird und wenn basierend auf der Kompression der Feder der Klemmmechanismus vorauseilend oder nacheilend gesteuert wird.

Bei dem erfindungsgemäßen Verfahren zur Bearbeitung eines Werkstücks mit einer erfindungsgemäßen Werkzeugmaschine wird an einem Werkstück zunächst ein Rundschleif-Bearbeitungsschritt und danach ein Profilschleif-Bearbeitungsschritt durchgeführt. Das Verfahren zeichnet sich dadurch aus, dass der Rundschleif-Bearbeitungsschritt durchgeführt wird, während das Werkstück zwischen der ausgefahrenen und radial gespannten Zentrierspitze und der Spitze des Reitstocks gehalten wird, dass danach unter Verringerung des Abstands zwischen dem Reibkegelspannsystem und der Spitze des Reitstocks das Werkstück in den Reibkegel eingepresst wird, wobei die radial entspannte Zentrierspitze zurückgeschoben wird und dass anschließend der Profilschleif-Bearbeitungsschritt durchgeführt wird.

Für eine weitergehende Automatisierung des Verfahrens kann nach Abschluss des Profilschleif-Bearbeitungsschritts das bearbeitete Werkstück mit der Zentrierspitze ausgestoßen werden. Besonders bevorzugt ist es, wenn bei dem Rundschleif-Bearbeitungsschritt eine Anlagefläche für die Aufnahme in den Reibkegel aus dem Werkstück herausgearbeitet wird.

Die Erfindung wird nachfolgend anhand von Figuren, die ein Ausführungsbeispiel darstellen, näher erläutert. Es zeigen
- Fig. 1: Einen Querschnitt durch ein erstes Reibkegelspannsystem mit ausgefahrener Zentrierspitze,
- Fig. 2: einen Querschnitt durch das erste Reibkegelspannsystem aus Figur 1 mit zurückgezogener Zentrierspitze,
- Fig. 3: einen Querschnitt durch ein zweites Reibkegelspannsystem,
- Fig. 4a: ein erstes Stadium bei der Ausführung eines der Erfindung unterfallenden Verfahrens,
- Fig. 4b: ein zweites Stadium bei der Ausführung des Verfahrens aus Figur 4a,
- Fig. 4c: ein drittes Stadium bei der Ausführung des Verfahrens aus Figur 4a,
- Fig. 4d: ein viertes Stadium bei der Ausführung des Verfahrens aus Figur 4a und
- Fig. 4e: ein fünftes Stadium bei der Ausführung des Verfahrens aus Figur 4a.

Für gleiche Reibkegelspannsysteme werden in allen Figuren, die sie zeigen, dieselben Bezugszeichen verwendet. Allerdings werden zur Verbesserung der Übersichtlichkeit der Figuren nicht alle Bezugszeichen in allen Figuren angetragen.

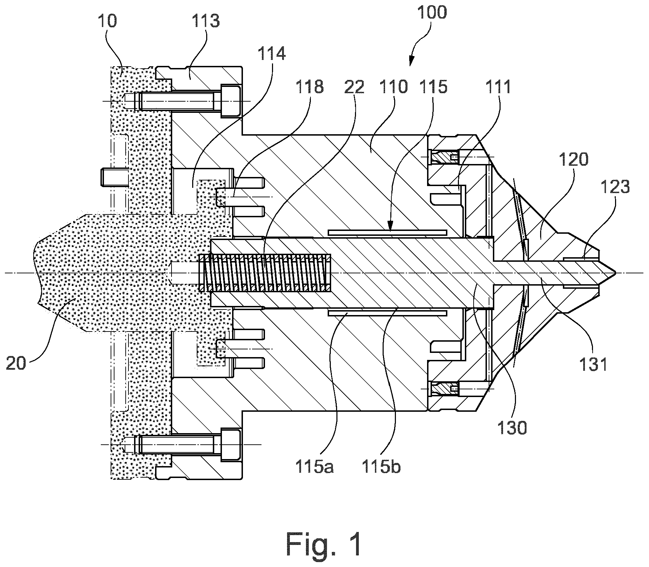

Figur 1 zeigt ein erstes Reibkegelspannsystem 100 mit einem rotationssymmetrischen Grundkörper 110, an dem an einer der Stirnseiten des Grundkörpers 110 ein Reibkegelaufsatz 120 drehfest verbunden angeordnet ist. Im hier dargestellten Beispiel erfolgt dies durch Verschrauben mittels Schrauben. Eine wiederholgenaue Positionierung wird dabei dadurch erreicht, dass der Reibkegelaufsatz 120 über einen als Konus 111 ausgeführten Vorsprung des Grundkörpers 110, der in eine Aufnahme im Reibkegelaufsatz 120 eingreift, zentriert und über eine nicht gezeigte Indexierung, die in den Reibkegelaufsatz eingreift, rotativ orientiert ist.

In dem dem Reibkegelaufsatz 120 gegenüberliegenden Endbereich des Grundkörpers 110 ist ein Flansch 113 vorhanden, über den der Grundköper 110 drehfest so mit einer Spindel 10 einer Werkzeugmaschine verbunden ist, dass die Drehachse der Spindel 10 und die Symmetrieachse des rotationssymmetrischen Grundkörpers 110 zusammenfallen.

Die Spindel 10 wird zentral von einer Zug-/Druckstange 20 durchsetzt, der in eine in der der Spindel 10 zugewandten Seite des Grundkörpers 110 angeordnete Ausnehmung 114 eingreift und innerhalb dieser Ausnehmung 114 axial verschiebbar ist, wobei Figur 1 die Zug-/Druckstange 20 in ihrer maximal vorgeschobenen Position zeigt. Die Bewegung der Zug-/Druckstange 20 kann beispielsweise durch Druckluft initiiert werden.

Auf der dem Grundkörper 110 zugewandten Stirnfläche der Zug-/Druckstange 20 ist über eine an der Zug-/Druckstange 20 befestigte Feder 22 ein Zentrierelement 130 abgestützt, das den Grundkörper 110 in einer zentralen, sich in Richtung parallel zu seiner Symmetrieachse erstreckenden Öffnung durchsetzt. Das Zentrierelement 130 erstreckt sich weiter in eine ebenfalls parallel zu dessen Symmetrieachse verlaufende Öffnung im Reibkegelaufsatz 120 hinein, die diesen durchsetzt und in die Werkstückaufnahme 123 des Reibkegelaufsatzes 120 übergeht, deren Seitenflächen sich im Endbereich aufweiten und den eigentlichen Reibkegel bilden.

Dabei geht das Zentrierelement 130 im Bereich des Reibkegelaufsatzes 120 in eine durch einen Abschnitt mit geringerem Durchmesser, dessen freies Ende spitz zuläuft, gebildete Zentrierspitze 131 über und ein Abschnitt der Öffnung im Reibkegelaufsatz hat einen reduzierten, an den Durchmesser der Zentrierspitze 131 angepassten Durchmesser und ist als Präzisionsführung ausgestaltet, so dass die Zentrierspitze 131 präzise geführt wird, wenn eine axiale Bewegung des Zentrierelements 130 erfolgt. Darüber hinaus wird das Zentrierelement 130 auch im Bereich des der Zug-/Druckstange 20 zugewandten Endes der Öffnung im Grundkörper 110 geführt.

In dem in Figur 1 dargestellten Zustand ist das Zentrierelement 130 mit einem Spannmittel 115 mit dem Grundkörper 110 verspannt, so dass es sich mit dem Grundkörper 110 mit dreht, wenn dieser durch die Spindel 10 in Rotation versetzt wird und diese Drehung auf ein zwischen der Zentrierspitze 131 und einer Spitze eines Reitstocks gelagertes Werkstück übertragen wird. Das Spannmittel 115 ist dabei in diesem Ausführungsbeispiel - grundsätzlich ist auch eine Verwendung anderer Spanntechnik, wie zum Beispiel einer Spannzange, möglich - als ein Hydrodehnspannfutter ausgeführt, bei dem eine ringförmige Ausnehmung 115a mit einer Hydrodehnmembran 115b zur Öffnung, in der das Zentrierelement 130 angeordnet ist, hin abgedichtet wird, so dass durch Druckbeaufschlagung eines in der ringförmigen Ausnehmung 115a befindlichen Fluids eine radiale Kraft in radialer Richtung zur Symmetrie- bzw. Drehachse hin erzeugt wird, die das Zentrierelement 130 festklemmt. Diese Druckbeaufschlagung kann beispielsweise dadurch herbeigeführt werden, dass die Zug-/Druckstange 20 beim Erreichen der maximal ausgefahrenen Endposition der Zentrierspitze 131 einen Taster auslöst oder einen Kolben 118 betätigt, der über einen Kanal mit der ringförmigen Ausnehmung 115a kommuniziert und bei Betätigung das in Kanal und ringförmiger Ausnehmung 115b enthaltene Fluid komprimiert. Bei geeigneter Konfiguration der Feder 22 kann die Feder 22, nachdem das Zentrierelement 130 gegen einen Anschlag 125 innerhalb der Öffnung im Reibkegelaufsatz 120 gefahren wurde, noch an der der Zug-/Druckstange 20 zugewandten Seite aus der Öffnung herausragen und komprimiert werden, während die Zug-/Druckstange 20 weiter in ihre in Figur 1 gezeigte Endposition, in der sie das Spannen des Spannmittels 115 auslöst, gefahren wird.

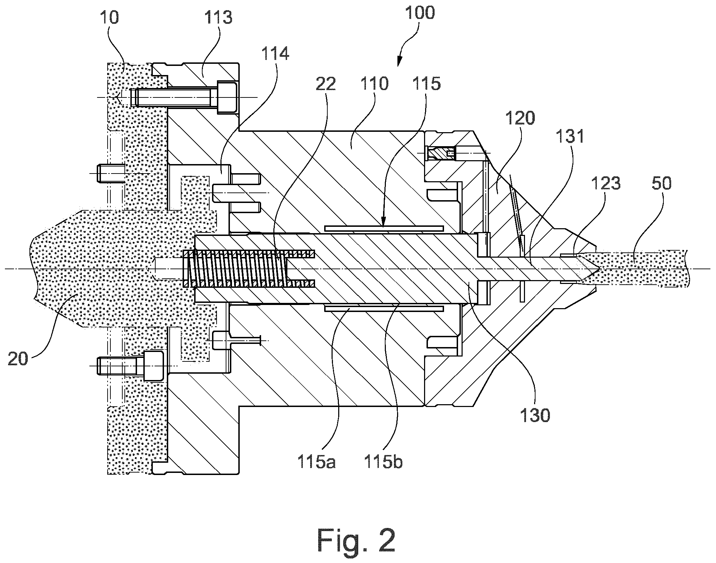

Um die Zentrierspitze 131 aus der in Figur 1 gezeigten ausgefahrenen in die in Figur 2 gezeigte zurückgezogene Position zu überführen, wird die Zug-/Druckstange 20 zurückgezogen. Das Zentrierelement 130 ist zunächst noch durch das Spannmittel 115 verspannt mit dem Grundkörper 110 und folgt demzufolge der Bewegung der Zug-/Druckstange 20 nicht unmittelbar. Weil aber die Verbindung zwischen der Zug-/Druckstange 20 und dem Zentrierelement 130 über die Feder 22 hergestellt wird, kann die Feder 22 sich nun wieder ausdehnen oder in die Länge gezogen werden, so dass die Stirnfläche der Zug-/Druckstange 120 den Taster oder Kolben 118 freigibt. Dies führt dann dazu, dass das Spannmittel 115 entspannt wird und das Zentrierelement 130 freigibt, das dann in die in Figur 2 gezeigte, zurückgezogene Position überführt wird.

Wenn das Werkstück 50 wie in Figur 2 gezeigt in die den Reibkegel bildende Werkstückaufnahme 123 eingeführt ist, wird die Zentrierspitze 131 getrieben durch die Kraft der Feder 22 an dessen Stirnfläche gedrückt, um den Rundlauf nicht zu beeinflussen. Angetrieben wird das Werkstück 50 dann durch die über den Reibkegelaufsatz 120, insbesondere dessen Werkstückaufnahme 123, und den Grundkörper 110 übertragene Drehung der Spindel 10.

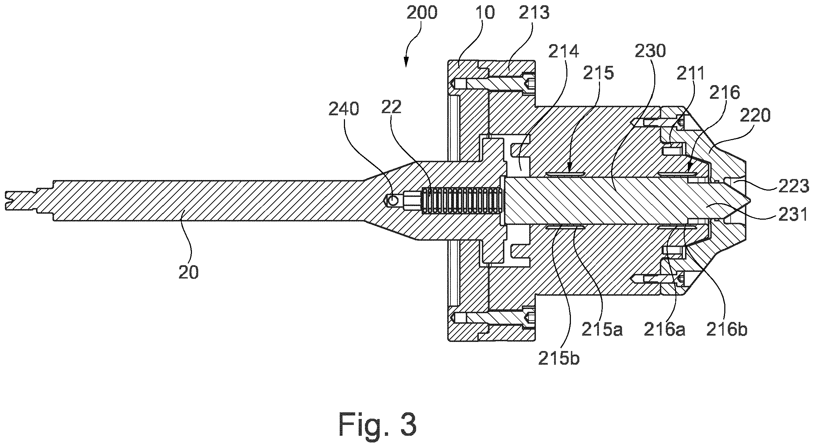

Figur 3 zeigt ein zweites Reibkegelspannsystem 200 mit einem rotationssymmetrischen Grundkörper 210, mit dem ein Reibkegelaufsatz 220 drehfest verbunden ist. Auch hier erfolgt eine wiederholgenaue Positionierung dadurch, dass der Reibkegelaufsatz 220 über einen als Konus 211 ausgeführten Vorsprung des Grundkörpers 210, der in eine Aufnahme im Reibkegelaufsatz 220 eingreift, zentriert und über eine nicht gezeigte Indexierung rotativ orientiert ist.

Auch bei dem Reibkegelspannsystem 200 gemäß Figur 3 ist der Grundkörpers 210 über den Flansch 213 drehfest mit der Spindel 10 der Werkzeugmaschine verbunden, wobei die Drehachse der Spindel 10 und die Symmetrieachse des rotationssymmetrischen Grundkörpers 210 zusammenfallen.

Die Spindel 10 wird auch in Figur 3 zentral von einer Zug-/Druckstange 20 durchsetzt, die in eine in der der Spindel 10 zugewandten Seite des Grundkörpers 210 angeordnete Ausnehmung 214 eingreift und innerhalb dieser Ausnehmung 214 axial verschiebbar ist.

Auch hier ist an der Zug-/Druckstange 20 über eine an der Zug-/Druckstange 20 befestigte Feder 22 ein Zentrierelement 230 abgestützt, das den Grundkörper 210 in einer zentralen, sich in Richtung parallel zu seiner Symmetrieachse erstreckenden Öffnung durchsetzt und sich weiter in eine ebenfalls parallel zu dessen Symmetrieachse verlaufende Öffnung im Reibkegelaufsatz 220 hinein erstreckt, die diesen durchsetzt und in die den Reibkegel bildende Werkstückaufnahme 223 des Reibkegelaufsatzes 220 übergeht, deren Seitenflächen sich im Endbereich aufweiten und den eigentlichen Reibkegel bilden. Die Funktion der Feder 22 und ihr Zusammenwirken mit den Bewegungen der Zug-/Druckstange 20 sind analog zu den Sachverhalten, die bereits oben im Zusammenhang mit dem ersten Ausführungsbeispiel beschrieben wurde.

Anders als im ersten Ausführungsbeispiel befindet sich hier im Teil der Öffnung, der im Reibkegelaufsatz 220 verläuft, lediglich die durch einen Abschnitt mit geringerem Durchmesser, dessen freies Ende spitz zuläuft, gebildete Zentrierspitze 231, die im Reibkegelaufsatz 220 geführt ist.

Bei dem in Figur 3 dargestellten Ausführungsbeispiel sind zwei Spannmittel 215, 216 vorgesehen, mit denen das Zentrierelement 230 bei ausgefahrener Zentrierspitze 231 mit dem Grundkörper 210 in zwei Spannebenen verspannt wird, so dass es sich mit dem Grundkörper 210 mit dreht, wenn dieser durch die Spindel 20 in Rotation versetzt wird. Die Spannmittel 215, 216 sind wieder als Hydrodehnspannfutter mit ringförmigen Ausnehmungen 215a, 216a und Hydrodehnmembranen 215b, 216b, so dass durch Druckbeaufschlagung eines in den ringförmigen Ausnehmungen 215a, 216a befindlichen Fluids eine radiale Kraft in radialer Richtung zur Symmetrie- bzw. Drehachse hin erzeugt wird, die das Zentrierelement 230 festklemmt. Diese Druckbeaufschlagung wird in diesem Beispiel durch Kolben 218a, 218b herbeigefüght, die von der Zug-/Druckstange 20 beim Erreichen der maximal ausgefahrenen Endposition der Zentrierspitze 231 betätigt werden.

In Figur 3 erkennt man zudem eine Austrittsöffnung 240, durch die Sperrluft in die Öffnung, in der das Fixierelement 230 bewegt wird, eingeblasen wird.

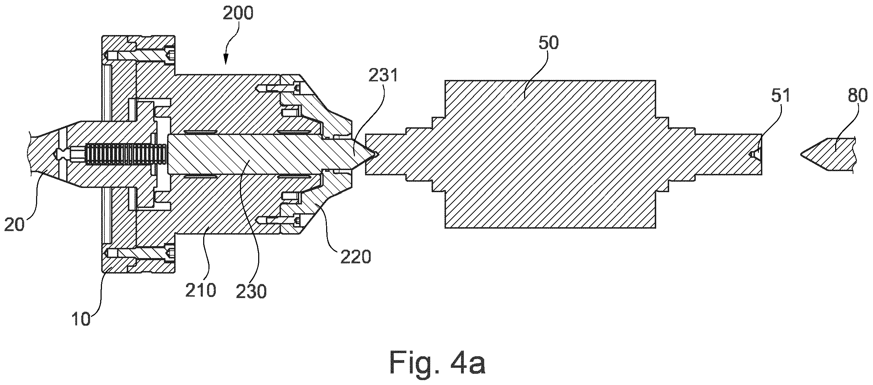

Das in Figur 4a dargestellte erste Stadium bei der Ausführung eines erfindungsgemäßen Verfahrens zeigt, wie das Werkstück 50, das hier auf beiden Stirnseiten mit Zentrierhilfen 51 versehen ist, zwischen der ausgefahrenen und gespannten Zentrierspitze 231 eines in der Figur 4a links dargestellten Reibkegelspannsystems 200, das wie in Figur 3 dargestellt und oben mit Bezug auf die Figur 3 beschrieben aufgebaut und mit Spindel 10 und Zug-/Druckstange 20 einer nicht dargestellten Werkzeugmaschine verbunden ist, und eine mitlaufende Spitze eines in Figur 4a rechts nur abschnittsweise dargestellten Reitstocks 80 der Werkzeugmaschine geladen wird.

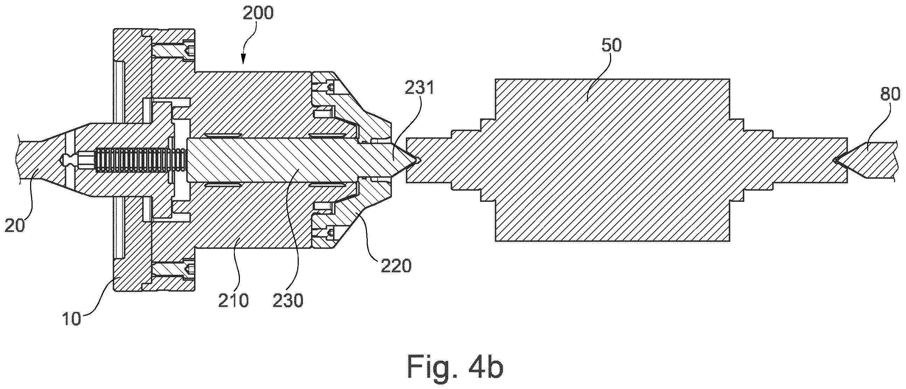

Durch Veränderung des Abstands zwischen dem Reibkegelspannsystem 200 und dem Reitstock 80 wird das in Figur 4b dargestellte Zwischenstadium herbeigeführt, in dem das Werkstück 50 zwischen der ausgefahrenen Zentrierspitze 231 des Reibkegelspannsystems 200 und der mitlaufenden Spitze des Reitstocks 80 gelagert ist, wobei ein Druck von den Spitzen ausgeübt wird, der ausreicht, um das Werkstück 50 durch die ausgefahrene, gespannte Zentrierspitze 231 anzutreiben und einen Rundschleifprozess durchzuführen.

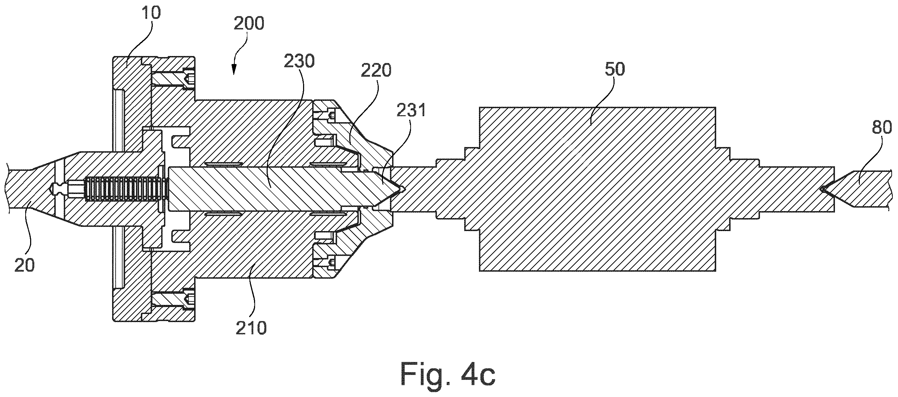

Nach dem Abschluss dieses Rundschleifprozesses wird die Zentrierspitze 231 entspannt und zurückgezogen, während der Abstand zwischen der Werkstückaufnahme 223 des Reibkegelspannsystems 200 und der mitlaufende Spitze des Reitstocks 80 - beispielsweise dadurch, dass diese in Richtung auf das Reibkegelspannsystem 200 hin ausgefahren wird - reduziert wird, so dass das Werkstück 50 mit hoher Kraft in den Reibkegel des Reibkegelspannsystems 200 hineingepresst wird, so dass am Werkstück 50 ein Profilschleif-Bearbeitungsschritt durchgeführt werden kann. Die Zentrierspitze 231 wird in diesem Stadium, das in Figur 4c gezeigt ist, nur noch durch die relativ schwache Kraft der Feder an das Werkstück 50 gepresst, weil sie nicht mehr im Grundkörper 210 gespannt ist. Die Drehung der Spindel 10 der Werkzeugmaschine wird über den Reibkegel des Reibkegelspannsystems auf das Werkstück 200 übertragen.

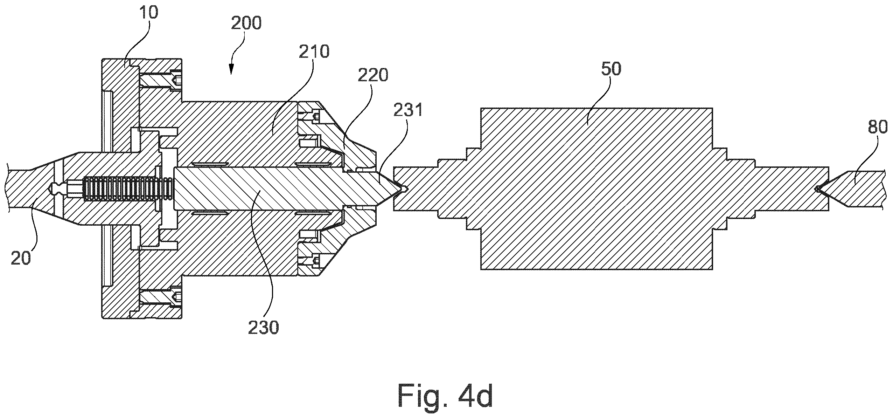

Nach Abschluss des Profilschleif-Bearbeitungsschrittes wird die Zentrierspitze 231 wieder ausgefahren und gespannt, während synchron dazu der Abstand zwischen der Werkstückaufnahme 223 und der mitlaufenden Spitze des Reitstocks 80 erhöht wird. Dadurch wird das Werkstück 50 aus dem Reibkegel gestoßen und wird nun wieder zwischen der Zentrierspitze 231 und der mitlaufenden Spitze des Reitstocks 80 gehalten, um das in Figur 4d dargestellte vierte Stadium bei der Ausführung des Verfahrens zu erreichen.

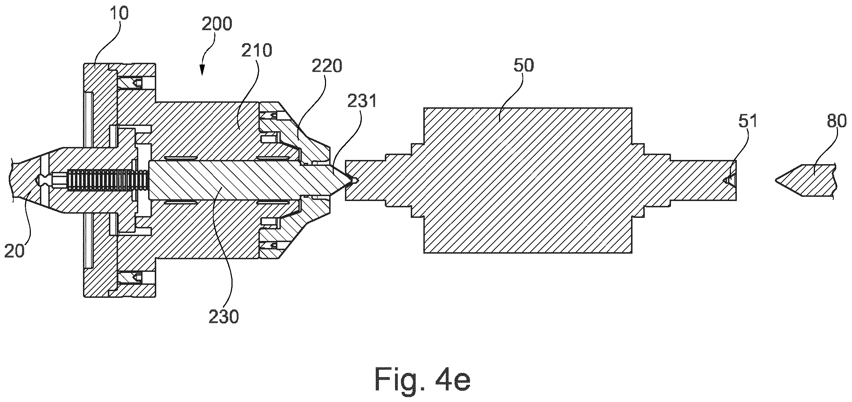

Abschließend kann dann die mitlaufende Spitze des Reitstocks 80, wie in Figur 4e gezeigt, noch weiter zurückgefahren werden, um das Werkstück 50 zu entnehmen.

### Bezugszeichenliste

- 10: Spindel
- 20: Zug-/Druckstange
- 22: Feder
- 50: Werkstück
- 51: Zentrierhilfe
- 80: Reitstock
- 100, 200: Reibkegelspannsystem
- 110, 210: Grundkörper
- 111, 211: Konus
- 113, 213: Flansch
- 114, 214: Ausnehmung
- 115, 215, 216: Spannmittel
- 115a, 215a, 216a: Ausnehmung
- 115b, 215b, 216b: Hydrodehnmembran
- 118, 218a, 218b: Kolben
- 120, 220: Reibkegelaufsatz
- 123, 223: Werkstückaufnahme
- 130, 230: Zentrierelement
- 131, 231: Zentrierspitze
- 240: Austrittsöffnung

## Patentansprüche

1. Reibkegelspannsystem (100, 200) mit einem rotationssymmetrischen Grundkörper (110, 210), an dem ein Reibkegelaufsatz (120, 220) mit einer einen Reibkegel bildenden Werkstückaufnahme (123, 223) angeordnet ist und mit einem Zentrierelement (130, 230) mit einer Zentrierspitze (131, 231), wobei das Zentrierelement (130, 230) parallel zur Symmetrieachse des rotationssymmetrischen Grundkörpers (110, 210) verschiebbar in einer den Grundkörper (110, 210) und den Reibkegelaufsatz (120, 220) konzentrisch zur Symmetrieachse des rotationssymmetrischen Grundkörpers (110, 210) durchsetzenden Öffnung angeordnet ist, die in die den Reibkegel bildende Werkstückaufnahme (123, 223) übergeht, so dass das Zentrierelement (120, 230) zwischen einer ausgefahrenen Position, in der die Zentrierspitze (131, 231) aus der Werkstückaufnahme (123,223) hervorragt, und einer zurückgezogene Position, in der die Zentrierspitze (131, 231) sich innerhalb der Werkstückaufnahme (123, 223) befindet, bewegt werden kann,
**dadurch gekennzeichnet, dass** der Grundkörper (110, 210) mindestens ein Spannmittel (115, 215, 216) aufweist, das ausgelegt und eingerichtet ist, um das Zentrierelement (130, 230) zumindest in der ausgefahrenen Position zentrisch zu spannen, so dass eine Rotation des Grundkörpers (110, 210) auf das Zentrierelement (130, 230) übertragen wird.

2. Reibkegelspannsystem (100, 200) nach Anspruch 1,
**dadurch gekennzeichnet, dass** die Öffnung im Reibkegelaufsatz (130, 230) zumindest einen Abschnitt mit reduziertem Durchmesser aufweist.

3. Reibkegelspannsystem (100, 200) nach einem der Ansprüche 1 oder 2,
**dadurch gekennzeichnet, dass** die Zentrierspitze (131, 231) in mindestens zwei Ebenen geführt ist.

4. Reibkegelspannsystem (100,200) nach einem der Ansprüche 1 bis 3,
**dadurch gekennzeichnet, dass** das Zentrierelement (130, 230) in einem Abschnitt der Öffnung innerhalb des Grundkörpers (110, 210) und in einem Abschnitt der Öffnung innerhalb des Reibkegelaufsatzes (120,220) geführt ist.

5. Reibkegelspannsystem (100, 200) nach einem der Ansprüche 1 bis 4,
**dadurch gekennzeichnet, dass** mindestens eine Austrittsöffnung (240) zum Zuführen von Sperrluft oder Kühlmittel in die Öffnung vorhanden ist.

6. Reibkegelspannsystem (100, 200) nach einem der Ansprüche 1 bis 5,
**dadurch gekennzeichnet, dass** das Spannmittel (115, 215, 216) ein Hydrodehnspannfutter ist.

7. Reibkegelspannsystem (100, 200) nach einem der Ansprüche 1 bis 6,
**dadurch gekennzeichneet**, dass Mittel zur Überwachung zumindest des Erreichens der axialen Endposition der Zentrierspitze (131, 231) im ausgefahrenen Zustand vorhanden sind.

8. Reibkegelspannsystem (100, 200) nach Anspruch 7,
**dadurch gekennzeichnet, dass** das Spannmittel (115, 215, 216) eingerichtet ist, um gespannt zu werden, wenn die Zentrierspitze (131, 231) ihre maximal ausgefahrene Position erreicht.

9. Reibkegelspannsystem (100, 200) nach einem der Ansprüche 1 bis 8,
**dadurch gekennzeichnet, dass** am Zentrierelement (130, 230) an dem der Zentrierspitze (131, 231) gegenüberliegenden Ende eine Feder (22) angeordnet ist.

10. Reibkegelspannsystem (100, 200) nach einem der Ansprüche 1 bis 6,
**dadurch gekennzeichnet, dass** der Reibkegelaufsatz (120, 220) auswechselbar am Grundkörper (110, 210) angeordnet ist.

11. Reibkegelspannsystem (100, 200) nach Anspruch 10,
**dadurch gekennzeichnet, dass** der Reibkegelaufsatz (120, 220) durch ein Nullpunktspannsystem am Grundkörper (110, 210) gespannt wird.

12. Reibkegelspannsystem (100, 200) nach Anspruch 10,
**dadurch gekennzeichnet, dass** der Reibkegelaufsatz (120, 220) über eine Präzisionsschnittstelle am Grundkörper (110, 210) wiederholgenau positioniert angeordnet ist, indem der Reibkegelaufsatz (120, 220) über einen Konus (111, 211) zentriert und/oder über eine Indexierung rotativ orientiert ist.

13. Werkzeugmaschine,
**dadurch gekennzeichnet, dass** die Werkzeugmaschine zum Einspannen von Werkstücken (50) ein Reibkegelspannsystem (100, 200) nach einem der Ansprüche 1 bis 12 und einen Reitstock (80) aufweist und dass die Werkzeugmaschine eine Spindel (10) mit einer axial verschiebbaren Zug-/Druckstange (20) aufweist, so dass das Fixierelement (130, 230) in der den Grundkörper (110, 210) und den Reibkegelaufsatz (120, 220) durchsetzenden Öffnung, die in die Werkstückaufnahme (123, 223) übergeht, durch Betätigung der Zug-/Druckstange (20) verschiebbar ist.

14. Werkzeugmaschine nach Anspruch 13,
**dadurch gekennzeichnet, dass** der Reitstock (80) eine mitlaufende Zentrierspitze aufweist.

15. Werkzeugmaschine nach Anspruch 13 oder 14,
**dadurch gekennzeichneet**, dass an der der Zentrierspitze (131, 231) gegenüberliegenden Seite des Zentrierelements (130, 230) eine Feder (22) angeordnet ist, die auf der Zug-/Druckstange (22) abgestützt wird und dass basierend auf der Kompression der Feder (22) der Klemmmechanismus vorauseilend oder nacheilend gesteuert wird.

16. Verfahren zur Bearbeitung eines Werkstücks (50) mit einer Werkzeugmaschine nach einem der Ansprüche 13 bis 15, bei dem an einem Werkstück (50) zunächst ein Rundschleif-Bearbeitungsschritt und danach ein Profilschleif-Bearbeitungsschritt durchgeführt wird,
**dadurch gekennzeichnet, dass** der Rundschleif-Bearbeitungsschritt durchgeführt wird, während das Werkstück (50) zwischen der ausgefahrenen und radial gespannten Zentrierspitze (131, 231) und der Spitze des Reitstocks (80) gehalten wird, dass danach unter Verringerung des Abstands zwischen dem Reibkegelspannsystem (100, 200) und der Spitze des Reitstocks (80) das Werkstück (50) in die den Reibkegel bildende Werkstückaufnahme (123, 223) eingepresst wird, wobei die radial entspannte Zentrierspitze (123, 223) zurückgeschoben oder zurückgezogen wird, und dass anschließend der Profilschleif-Bearbeitungsschritt durchgeführt wird.

17. Verfahren nach Anspruch 16,
**dadurch gekennzeichnet, dass** nach Abschluss des Profilschleif-Bearbeitungsschritts das bearbeitete Werkstück (50) mit der Zentrierspitze (131, 231) ausgestoßen wird.

18. Verfahren nach Anspruch 16 oder 17,
**dadurch gekennzeichnet, dass** bei dem Rundschleif-Bearbeitungsschritt eine Anlagefläche für die Aufnahme in die den Reibkegel bildende Werkstückaufnahme (123, 223) aus dem Werkstück (50) herausgearbeitet wird.
